# EUROPEAN PATENT APPLICATION

(11) **EP 1 647 564 A1**
(43) Date of publication of application: **19.04.2006**
(21) Application number: 05021575.5
(22) Date of filing: 01.10.2005
(51) Int. Cl.: C08G 18/42, C09D 175/06, C09D 167/00

(54) **A flexible,weather resistant powder coating composition based on phthalic acid units containing polyesters**

(30) Priority: 12.10.2004 US 962800
(71) Applicant: Bayer MaterialScience LLC, Pittsburgh PA 15205 (US)
(72) Inventor: Stevenson, Thomas A., Pittsburgh PA 15237 (US); Subramanian, Ramesh, Coraopolis PA 15108 (US); Starcher, Rick V., Monaca PA 15061-2637 (US); Smedley, Larry, Pittsburgh PA 15204-1005 (US); Dove, Homer H., Oakdale PA 15071 (US)
(74) Representative: Bailly, Peter

(57) **Abstract**

Powder coatings having good impact resistance and weatherability characteristics are produced with an isophthalic acid-based polyester and an isocyanate-based curing agent.

## Description

### BACKGROUND OF THE INVENTION

The present invention relates to thermosetting powder coatings that are flexible and super durable (i.e., have a forward and a reverse durability greater than 60 inch pounds) and have good weatherability properties which are obtained with an isophthalic acid-based polyester resin. The present invention also relates to the use of these compositions for the preparation of powder paints and varnishes and to articles coated with these compositions.

Thermosetting powder compositions are well known in the art and are widely used as paints and varnishes for the coating of a variety of articles. These powders have many advantages. These advantages include excellent chemical resistance, flexibility, a high degree of freedom in design and aesthetics, etc. The powders are substantially completely used because only the powder which comes into direct contact with the substrate is retained by the substrate while any excess powder is preferably recoverable and reusable. Powder compositions are therefore frequently preferred to coating compositions in solution in an organic solvent because of their clear economic and ecological advantages.

Thermosetting powder compositions are widely used to coat metal parts used, e.g., in appliances or accessories for the motor-vehicle industry. They are generally composed of a binder, a curing agent, one or more fillers, one or more pigments, one or more catalysts and other known additives which are selected on the basis of the properties required for the intended use of the coated article.

Various types of thermosetting powder compositions exist. Among the most widely known compositions are those which include a hydroxyl-group containing polyester binder and a curing agent such as a blocked or a self-blocked polyisocyanate.

Polyesters containing hydroxyl groups which can be used for the preparation of powder varnishes and paints are the subject of numerous publications. These polyesters are usually prepared from aromatic polycarboxylic acids, mainly terephthalic acid and isophthalic acid and optionally a minor proportion of an aliphatic or cycloaliphatic dicarboxylic acid, and one or more aliphatic polyols such as ethylene glycol, neopentyl glycol, 1,4-butanediol, and trimethylolpropane. These polyesters based on aromatic dicarboxylic acids, when they are used with a suitable curing agent, provide thermosetting compositions having good appearance and good mechanical properties such as impact strength and flexibility. Some of these polyesters and the powders prepared from them are also commonly employed because of their outstanding weatherability properties.

To date, outstanding weatherability properties have been achieved only with polyesters based on isophthalic acid. However, the coatings obtained from these polyesters do not have the mechanical flexibility required for many coatings applications. One approach to improving the mechanical properties of powder coatings made with an isophthalic acid-based polyester is to use a mixture of semi-crystalline and amorphous polyester. See, e.g., U.S. Patents 6,635,721 and 4,859,760. This approach increases the raw material and production costs of the coating composition. It also introduces powder plant manufacturing and process difficulties due to sintering of crystalline compounds.

It would therefore be advantageous to develop an isophthalic acid-based polyester binder which could be used to produce coatings characterized by good weatherability and good mechanical properties (particularly impact strength) by reacting that polyester with alcohols and curing agents which are readily available and commonly used by those skilled in the art and are based solely on amorphous resins and crosslinkers.

### SUMMARY OF THE INVENTION

It is an object of the present invention to provide a powder coating composition characterized by good weatherability and good mechanical properties that is based on an amorphous resin and crosslinker. Due to the economic constraints in the powder coatings industry and the almost exclusive acceptance of polyesters as binders in the industry, the resin is predominantly based on isophthalic acid.

It is another object of the present invention to provide coated articles which are characterized by super durability and good weatherability.

These and other objects which will be apparent to those skilled in the art are accomplished by using as the binder a polyester polyol having an average hydroxyl functionality of from 1.9 to 2.4 which polyester polyol is the reaction product of an acid which is predominantly (i.e., greater than 75% by weight) isophthalic acid, a diol, and optionally, a polyol having a hydroxyl group functionality greater than 2, preferably, a functionality of 3 or 4. This polyester polyol is cured with an isocyanate-based curing agent. The polyester polyol and curing agent are used in amounts such that the average functionality of polyester polyol and isocyanate-based curing agent is greater than 2.2 but less than 2.375, preferably, about 2.25. This average functionality is calculated by dividing the sum of the functionality of the polyester polyol and of the isocyanate-based curing agent by 2.

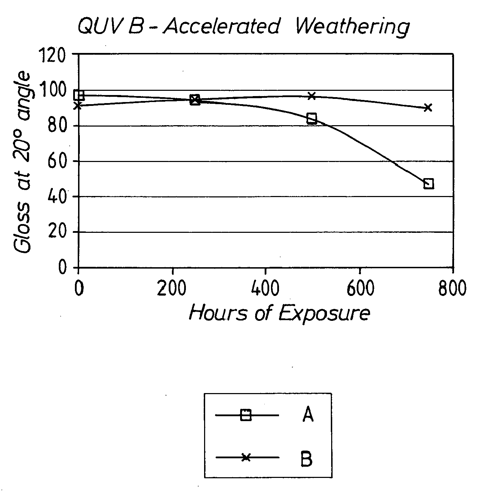

### BRIEF DESCRIPTION OF THE DRAWING

The Figure is a graphical comparison of the weatherability property (as measured by gloss) over time of a commercially available coating of standard durability made with a terephthalic acid-based polyester and a coating within the scope of the present invention.

### DETAILED DESCRIPTION OF THE PREFERRED EMBODIMENTS OF THE PRESENT INVENTION

The present invention is directed to a thermosetting powder coating characterized by good weatherability and mechanical properties. This coating composition is made up of (a) a binder and (b) a curing agent. The binder includes a polyester polyol having an average functionality of from 1.9 to 2.4, preferably, from about 2.1 to about 2.3, most preferably about 2.2. This average functionality is calculated as follows:
- OH =: equivalents of OH groups
- ESTER =: equivalents of ester bonds formed
- OH Number =: 56,100 x (OH - ESTER) / Charge (g) - ESTER x 18 [g/equiv].
- Charge (g)=: total of grams of acid + grams of diol + grams of optional polyol.
- Mₙ =: [(Charge (g) - ESTER) x18] divided by (total moles of acid, diol and polyol minus ESTER).
- OH Functionality =: OH Number x Mₙ/ 56,100.

The curing agent is preferably, a blocked isocyanate curing agent.

The binder and curing agent are selected so that the average of the sum of the hydroxyl functionality of the binder plus the functionality of the reactive groups is greater than or equal to 2.2 and less than or equal to 2.375, preferably, about 2.25.

The polyester polyols required for the coating compositions of the present invention must be the reaction product of an acid which is predominantly isophthalic acid, a diol and, optionally, a polyol having a hydroxyl functionality greater than 2, preferably a functionality of 3 or 4.

The isophthalic acid-based polyesters used in the coating compositions of the present invention generally have a number-average molecular weight of from 1700 to 4500, preferably from 2000 to 3200; a glass transition temperature (Tg) of from 40 to 80° C (measured by DSC); a melt viscosity of from 500 to 5,000 mPa·s measured at 200°C (Brookfield Viscosimeter CAP2000H, 750 rpm, spindle 6).

The acid constituent of the polyester used in the thermosetting compositions in accordance with the present invention is predominantly isophthalic acid, i.e., at least 75 wt%, preferably, at least 90 wt%, most preferably, at least 95 wt%, of the total acid used is isophthalic acid. When the acid used is less than 100% isophthalic acid, the remainder of the acid used may be adipic acid (which should be used in an amount of less than 10 wt%), phthalic anhydride, trimellitic acid anhydride or any other acid or acid anhydride known to those skilled in the art.

The hydroxyl materials useful for the production of the isophthalic acid-based polyester used in the thermosetting compositions of the present invention include at least one diol and, in most cases, at least one polyol having a hydroxyl functionality greater than 2, preferably a functionality of 3 or 4. The dioland, if used, the polyol, is/are generally used in an amount such that the molar ratio of acid to total hydroxyl groups in the diol and polyol is from about 1.05 to about 1.14, preferably, from about 1.07 to about 1.12.

Suitable diols include: neopentyl glycol; 2-butyl-2-ethyl-1,3-propanediol; ethylene glycol; diethylene glycol; triethylene glycol; propylene glycol; 1,3-propanediol; 1,4-butanediol, 1,5-pentanediol; 1,6-hexanediol; 2,4-dimethyl-2-ethylhexane-1,3-diol; 2,2-dimethyl-1,3-propanediol; 2-ethyl-2-isobutyl-1,3-propanediol; 1,3-butanediol; 1,8-octanediol; 2,2,4-trimethyl-1,6-hexanediol; thiodiethanol; 1,2-cyclohexanedimethanol; 2,2,4,4-tetramethyl-1,3-cyclobutanediol; 1,4-cyclohexanedimethanol; 2-methyl-1,3-propanediol; hydrogenated bisphenol A; neopentyl glycol hydroxypivalate; and mixtures and combinations thereof.

Branching in the polyester may be achieved by using polyols containing three or four hydroxyl groups, such as trimethylolpropane, 1,2,3-propanetriol; 1,2,6-hexanetriol; 2,2-bis(hydroxymethyl)-1,3-propanediol; 1,3,5-tris-(2-hydroxyethyl)-isocyanurate; ditrimethylolpropane; trimethylolethane; pentaerythritol; and mixtures and combinations thereof.

The polyester containing hydroxyl groups may be prepared by any of the conventional methods for synthesizing polyesters known to those skilled in the art, e.g., one-step or multi-step esterification. It is preferred that the synthesis of the polyester be carried out in a single step. Any of the conventional reactors may be used to produce the polyester required in the present invention. It is preferred, however, that the reactor be equipped with a stirrer, an inert gas (nitrogen) inlet, a distillation column linked to a water-cooled condenser and a thermometer connected to a thermoregulator.

The esterification conditions used for the preparation of the polyester are conventional. A standard esterification catalyst derived from tin, such as dibutyltin oxide, dibutyltin dilaurate or n-butyltin trioctoate, or derived from titanium, such as tetrabutyl titanate, or Brönsted acids such as phosphoric acid and sulfuric acid, may be used in an amount of from 0.01 to 0.5% by weight of the reactants. Optionally, antioxidants, such as the phenolic compound IRGANOX 1010 (CIBA-GEIGY), or phosphonite-type and phosphite-type stabilizers, such as tributyl phosphite, may be added in an amount of from 0 to 2% by weight of the reactants.

The esterification is generally carried out at a temperature which is gradually increased from 160°C. to approximately 270°C., under pressure(s) of from 5 to 1600 torr until a polyester having the desired acid number is obtained. The degree of esterification is monitored by determining the amount of water formed in the course of the reaction and the properties of the polyester obtained, for example the acid number, the OH number, the molecular weight and/or the viscosity.

These polyesters containing hydroxyl groups act as binders which in conjunction with a curing agent form the thermosetting super durable powder compositions of the present invention which are especially useful for varnishes and paints that may be applied using the technique of deposition by means of an electrostatic or tribo-electric spray gun or using the technique of fluidized-bed deposition.

In the process for coating an article, preferably a metal article, by application of a thermosetting powder composition in accordance with the invention, the article to be coated is coated by spray deposition using an electrostatic or tribo-electric gun or by fluidized-bed deposition and the coating is cured at a temperature of from 100 to 250°C. for a period of from approximately 0.5 to 60 minutes, preferably, from 5 to 20 minutes.

The curing agent used to produce the thermosetting powder compositions of the present invention is chosen from compounds containing functional groups capable of reacting with the hydroxyl groups of the polyesters. Suitable curing agents include: isocyanates, blocked isocyanates, self-blocked isocyanates (also known as "uretdiones") and materials containing more than one of such functional groups. Blocked isocyanates based on hydrogenated MDI (diphenylmethane diisocyanate) and ε-caprolactam are particularly preferred. The most preferred curing agent is that whch is commercially available under the name Crelan NW5 (average functionality = 2.3) from Bayer MaterialScience.

The curing agent must have a functionality such that the average of the sum of the functionality of that curing agent plus the hydroxyl functionality of the polyester will be greater than or equal to 2.2 but less than or equal to 2.375, preferably, about 2.25. This curing agent must be used in an amount such that the ratio of the functional groups in the curing agent to the functional groups in the polyester is between 0.85 and 1.15, preferably, approximately 1.

The thermosetting powder compositions in accordance with the invention may also contain various additives and processing aids used conventionally in the manufacture of powder paints and varnishes.

The additives and processing aids which may optionally be added to the thermosetting compositions of the present invention include: ultraviolet-radiation-absorbing compounds; light stabilizers; other stabilizers; antioxidants; flow control agents; plasticizers; grinding aids; drying oils; and degassing agents such as benzoin. These additives and processing aids are used in conventional amounts, it being understood that if the thermosetting compositions in accordance with the invention is used as a clear coat, the addition of auxiliary substances having opacifying properties should be omitted.

The coating compositions of the present invention may also contain up to 10% by weight (based on the total weight of coating composition plus additives) variety of any of the known mineral fillers and pigments. Examples of such pigments and fillers include: metal oxides such as titanium dioxide, iron oxide, zinc oxide, etc.; metal hydroxides; metal powders; sulfides; sulfates; carbonates; silicates such as aluminum silicate; carbon black; talc; china clays; barytes; iron blues; lead blues; organic reds; and organic maroons.

In one embodiment of the present invention, the thermosetting powder compositions, the polyester, the curing agent and any additives and/or processing aids are dry-mixed, for example in a drum mixer. Next, this mixture is homogenized at a temperature of from 80 to 140°C in an extruder. Suitable extruders include a single-screw Buss-Ko-Kneader extruder and a twin-screw extruder of the Prism or A.P.V. type. Next, the extrudrate is allowed to cool and solidify. The solid extrudate is then sieved in order to obtain a powder with an average particle size between 10 and 70, preferably, between 25 and 45 micrometers.

The thermosetting powder compositions of the present invention are characterized by excellent storage stability and their ability to produce coatings with a smooth surface appearance having a high gloss and forward/reverse impact performance greater than or equal to 60/60 inch pounds which are preserved over time at coating thicknesses of 2.7 mils or less. Generally, the powder compositions of the present invention perform better than 60/60 inch pounds in forward/reverse impact which is a significant improvement over state of the art coatings.

It is obvious that in the powder paint industry, excellent weatherability, combined with excellent flexibility properties imparted by the use of compositions in accordance with the invention are of commercial importance.

The powder paints and varnishes thus obtained are completely suitable for application on the article to be coated using the conventional techniques, that is to say using the well-known technique of fluidized-bed deposition or by application using an electrostatic or triboelectric spray gun. In the latter case, additives known to increase the ability to take a charge in triboelectric systems are added.

After having been applied to the article to be coated, the coatings deposited may be cured in accordance with any of the techniques known to those skilled in the art. Examples of suitable curing techniques include baking in an oven at a temperature of from 100 to 250°C, preferably, from about 170 to about 210°C for a period of approximately 0.5 to 60 minutes, preferably, from 5 to 20 minutes to cure the coating. It is also possible to cure the coating with infrared radiation to induce a faster cure than in a convection oven. A combination of infrared radiation and baking in a convection oven may also be used.

Having thus described our invention, the following Examples are given as being illustrative thereof. Unless indicated otherwise, the parts and percentages given in the examples are parts by weight or percentages by weight

### EXAMPLES

### EXAMPLE 1

1990 gram of neopentyl glycol and 72 grams of trimethylolpropane were charged to the reactor equipped with a stirrer which was immersed in oil maintained at a temperature of 160°C under nitrogen. Agitation of the reactor contents at 16 rpm was begun, and after approximately 35 minutes, 2977 grams of isophthalic acid and 5 grams of organic tin esterification catalyst (Tegokat-250, available from Goldschmidt) were added to the reactor. The agitation in the reactor was increased to 42 rpm and the temperature of the oil was gradually raised at a rate of 4°C/hr to a temperature of 230°C. When distillation under atmospheric pressure had ceased, a vacuum of 600 torr was progressively established.

After heating the mixture at 230°C. under a vacuum of 600 torr for three hours, the reactor contents were poured into an aluminum pan and allowed to cool. The polyester containing hydroxyl groups thus obtained had the following characteristics:

| | |
|---|---|
| acid number | 2.18 mg of KOH/g |
| hydroxyl number | 46.7 mg of KOH/g |
| Viscosity at 20°C | 980 mPa·s |
| T_{g} | 51.7°C |
| Functionality | 2.2 |

### EXAMPLE 2

The procedure of Example 1 was repeated using 2072 grams, of neopentyl glycol, 35 grams of trimethylolpropane, 2977 grams of isophthalic acid and 5.0 grams of the organic tin esterification catalyst available under the name Tegokat-250.

The polyester polyol thus produced had an acid number of 1.9 mg KOH/g, an OH Number of 38.5 mg KOH/g, a viscosity at 200°C of 780 mPa·s, Tg equal to 51.3 and a functionality of 2.1.

### EXAMPLE 3

The procedure of Example 1 was repeated using 1984 grams of neopentyl glycol, 108 grams of trimethylolpropane, 2977 grams of isophthalic acid, and 5 grams of the organic tin esterification catalyst which is available under the name Tegokat-250.

The polyester polyol thus produced had an acid number of 2.4 mg KOH/g, an OH Number of 43.2 mg KOH/g, a viscosity at 200°C of 1100 mPa·s, and a functionality of 2.45.

The following materials were used to make coating compositions in the Examples which follow:
- POLYESTER A:: A polyester produced in accordance with Example 1.
- POLYESTER B:: A polyester produced in accordance with Example 2.
- POLYESTER C:: A polyester produced in accordance with Example 3.
- CURING AGENT:: The blocked polyisocyanate curing agent which is commercially available from Bayer MaterialScience under the name Crelan NW-5. (functionality = 2.32); equivalent weight = 336.)
- FLOW AGENT:: The flow control agent which is commercially available from Estron under the name Resiflow P-67.
- DEGASSING AGENT:: Benzoin.
- PIGMENT A:: Titanium dioxide which is commercially available from DuPont de Nemours under the designation R-960.
- PIGMENT B:: Titanium dioxide which is commercially available from Mellenium under the designation R-961.
- PIGMENT C:: Black pigment which is commercially available under the name Raven 1255.
- CATALYST:: Dibutyltindilaurate.

### EXAMPLES 4-6

POLYESTER A or POLYESTER B or POLYESTER C, CURING AGENT, FLOW AGENT, DEGASSING AGENT, PIGMENT C AND CATALYST were combined in the amounts indicated in Table 1. The mixture was then extruded in a Prism PC 24mm extruder in which zone #1 was at a temperature of 30°C and zone #2 was at a temperature of 105°C at 400 rpm. The extrudate was pulverized and applied to an aluminum substrate in the thickness indicated, baked as indicated in Table 1. The film thickness, distinctness of image (DOl), Gloss at 20° is the gloss measured at an angle of 20° in accordance with ASTM D 523, Gloss at 60° is the gloss measured at an angle of 60° in accordance with ASTM D 523, Direct/Reverse Impact as determined in accordance with ASTM D 2794, and chemical resistance reported as number of double rubs with methyl ethyl ketone [MEK] are reported in Table 1.

**TABLE 1**

| Example/Material | 4 | 5* | 6* |
|---|---|---|---|
| POLYESTER A (gm) | 374.4 | --- | --- |
| POLYESTER B (gm) | --- | 384 | --- |
| POLYESTER C (gm) | --- | --- | 379.2 |
| CURING AGENT (gm) | 105.6 | 96 | 100.8 |
| FLOW AGENT (gm) | 5 | 5 | 5 |
| DEGASSING AGENT (gm) | 2.5 | 2.5 | 2.5 |
| PIGMENT C (gm) | 12.5 | 12.5 | 12.5 |
| Film Thickness (mils) | 1.8-2.2 | 1.8-2.6 | 1.8-2.2 |
| Bake Schedule | 15'/200°C | 15'/200°C | 15'/200°C |
| 20° Gloss | 94.6 | 94.2 | 91.1 |
| 60° Gloss | 95.3 | 97.0 | 95.0 |
| DOI | 88.1 | 89.8 | 86.0 |
| Impact (Forward/Reverse) (inch-lbs) | 140/140 | 60/40 | 40/20 |
| MEK Double Rubs | 100 Pass | 100 | 100 |

| | | | |
|---|---|---|---|
| *Comparative Example | | | |

It can be seen from the data presented in Table 1 that the powder coatings made with POLYESTER B or POLYESTER C do not have the desired impact performance (i.e., forward and reverse impact greater than 60 inch pounds) of the coating made in accordance with the present invention.

### EXAMPLES 7-11

POLYESTER A, CURING AGENT, FLOW AGENT, DEGASSING AGENT, PIGMENT C and CATALYST were combined in the amounts indicated in Table 2. The mixture was then extruded in a Prism PC 24 mm extruder (zone #1 at 30°C, zone #2 at 105°C, 400 rpm). The extrudate was pulverized and applied to an aluminum substrate in the thickness indicated in Table 2. The film thickness, DOI, Gloss at 20°, Gloss at 60°, Direct/Reverse Impact and MEK are reported in Table 2.

**TABLE 2**

| Example/ Material | 7* | 8* | 9* | 10 | 11 |
|---|---|---|---|---|---|
| POLYESTER A (gm) | 775 | 775 | 775 | 775 | 775 |
| CURING AGENT (gm) | 174 | 183 | 193 | 203 | 212 |
| FLOW AGENT (gm) | 10 | 10 | 10 | 10 | 10 |
| DEGASSING AGENT (gm) | 5 | 5 | 5 | 5 | 5 |
| PIGMENT C (gm) | 15 | 15 | 15 | 15 | 15 |
| CATALYST (gm) | 2 | 2 | 2 | 2 | 2 |
| Total Weight | 981 | 990 | 1000 | 1010 | 1019 |
| NCO:OH | 0.8 | 0.84 | 0.89 | 0.93 | 0.98 |
| Bake Schedule | 10'/200°C | 10'/200°C | 10'/200°C | 10'/200°C | 10'/200°C |
| Thickness (mils) | 2 | 2.3 | 2.3 | 2.2 | 2.2 |
| DOI | 86.3 | 84.5 | 88.2 | 88.5 | 88.5 |
| 20° Gloss | 90 | 90 | 91 | 91 | 91 |
| 60° Gloss | 95 | 95 | 95 | 95 | 95 |
| Direct Impact | <40 | 40 | 40 | 80 | 100 |
| Reverse Impact | <20 | <20 | <20 | 60 | 80 |
| MEK | 80 very soft | 100 very soft | 100 very soft | 100 soft | 100 slight mar |

| | | | | | |
|---|---|---|---|---|---|
| *Comparative Example | | | | | |

It can be seen from the data presented in Table 2 that the mechanical properties of the coating improved as the amount of curing agent was increased.

### EXAMPLES 12-18

A powder coating produced in accordance with Example 9 (NCO:OH = 0.89) was baked onto an aluminum substrate at the rates indicated in Table 3. The properties of those coatings are reported in Table 3.

**TABLE 3**

| Ex. | 12* | 13 | 14* | 15 | 16 | 17 | 18 |
|---|---|---|---|---|---|---|---|
| Bake Schedule | 10'/ 200°C | 15'/ 200°C | 15'/ 200°C | 20'/ 200°C | 20'/ 200°C | 30'/ 200°C | 30'/ 200°C |
| Coating (Example) | 9 | 9 | 9 | 9 | 9 | 9 | 9 |
| Thickness (mils) | 2.3 | 1.8 | 2.7 | 2.1 | 2.5 | 1.9 | 2.4 |
| DOI | 88.2 | 88 | 86.5 | 86.6 | 87.5 | 88.3 | 86.7 |
| 20° Gloss | 91 | 90 | 91 | 90 | 90 | 90 | 90 |
| 60 Gloss | 95 | 95 | 95 | 95 | 95 | 95 | 95 |
| Direct Impact | 40 | 160 | 40 | 160 | 80 | 160 | 100 |
| Reverse Impact | <20 | 160 | 20 | 160 | 80 | 160 | 100 |
| MEK | 100 V. Soft | --- | --- | --- | --- | --- | --- |

| | | | | | | | |
|---|---|---|---|---|---|---|---|
| *Comparative Example | | | | | | | |

It can be seen from the data presented in Table 3 that a longer bake cycle significantly influences impact performance. Thickness also has an important effect upon impact performance.

### EXAMPLES 19-25

A coating produced in accordance with Example 10 (NCO:OH - 0.93) was applied to an aluminum substrate in varying thicknesses and baked at various rates. The properties of these coatings are reported in Table 4.

**TABLE 4**

| Example | 19* | 20 | 21 | 22 | 23 | 24 | 25 |
|---|---|---|---|---|---|---|---|
| Bake Schedule | 10'/ 200°C | 15'/ 200°C | 15'/ 200°C | 20'/ 200°C | 20'/ 200°C | 30'/ 200°C | 30'/ 200°C |
| Thickness (mils) | 2.2 | 1.5 | 2 | 1.5 | 2.4 | 1.5 | 2.6 |
| DOI | 88.5 | 87.7 | 88.5 | 87.7 | 88.4 | 87.7 | 88 |
| 20° Gloss | 91 | 92 | 91 | 91 | 91 | 92 | 91 |
| 60° Gloss | 95 | 96 | 96 | 95 | 94 | 96 | 94 |
| Direct Impact | 80 | 160 | 140 | 160 | 100 | 160 | 80 |
| Reverse Impact | 60 | 160 | 160 | 160 | 120 | 160 | 60 |

| | | | | | | | |
|---|---|---|---|---|---|---|---|
| *Comparative Example | | | | | | | |

It can be seen from the data presented in Table 4 that coating thickness has a much more significant effect upon coating durability than the bake schedule. Over all, the impact performance is better than the coatings reported in Table 3 because the NCO:OH ratio is closer to 1:1 (i.e., 0.93).

The data in Tables 3 and 4 clearly indicate that a minimum bake schedule of 15'/200°C is required for the coatings produced in accordance with Examples 9 and 10. Even at thicknesses as high as 2.5 mils (Ex. 16), coatings produced in accordance with the present invention have good durability and impact characteristics.

### EXAMPLES 26-27

A coating was made using each of PIGMENTS A and B in amounts such that the pigment content was 25%. The amounts of POLYESTER, CURING AGENT, FLOW AGENT, DEGASSING AGENT, PIGMENT A or PIGMENT G and CATALYST are given in Table 5. The coating was applied to a substrate in the thickness indicated in Table 5. The properties of the coating are also reported in Table 5.

**TABLE 5**

| Example | 26* | 27* |
|---|---|---|
| POLYESTER (gm) | 572.8 | 572.8 |
| CURING AGENT (gm) | 160.2 | 160.2 |
| FLOW AGENT (gm) | 10.0 | 10.0 |
| DEGASSING AGENT (gm) | 5 | 5 |
| PIGMENT A (gm) | 250.0 | --- |
| PIGMENT B (gm) | --- | 250.0 |
| CATALYST (gm) | 2.0 | 2.0 |
| Thickness (mils) | 2.0 | 1.8 |
| 20° Gloss | 85 | 85 |
| 60° Gloss | 94 | 94 |
| DOI | 82.9 | 81.3 |
| Direct Impact | <40 | <40 |
| Reverse Impact | <20 | <20 |
| MEK | 100 | 100 |

It can be seen from the data presented in Table 5 that coatings having a pigment content of 25% which would otherwise be within the scope of the present invention do not show good impact resistance even at a thickness of 2 mils.

### EXAMPLES 28-29

The weatherability measurement conducted on the coated substrates produced in accordance with Examples 28 and 29 was carried out in a Q-UV apparatus for measuring accelerated ageing in which the coatings were subjected to the intermittent effects of condensation (4 hours at 40°C.) as well as to simulated effects of light-induced deterioration produced by fluorescent UV lamps (lamps UV-B 313 nm) for 8 hours at 60°C, according to standard ASTM D 4587-01.

### EXAMPLE 28

A powder coating (Coating B) within the scope of the present invention was produced by extruding a mixture of 455 grams of POLYESTER A, 121 grams of CURING AGENT, 15 grams of PIGMENT C, 6 grams of FLOW AGENT, and 3 grams of **DEGASSING AGENT** at 37°C (zone 1) and 105°C (zone 2), cooling and pulverized to an average particle size of 75µm. This coating (Coating B) was then applied to an aluminum substrate at a thickness of from 1.8 to 2.8 mils and baked for 15 minutes at 200°C. This coated substrate was then subjected to a QUV B Accelerated Weathering Test. The results of this weathering test are graphically illustrated in the Figure.

### EXAMPLE 29

A powder coating (Coating A) which is standard in the coating industry was produced in the same manner as Coating B with the exception that 480.19 grams of the polyester which is commercially available from Bayer MaterialScience under the name Rucote 102 was used instead of POLYESTER A and CURING AGENT was replaced with 95.82 grams of the isocyanate-based curing agent which is commercially available from Bayer MaterialScience under the name Crelan N12. (These materials are the industry standard for powder coatings with standard weatherability.) This coating was then applied to an aluminum substrate at a thickness of 1.8 to 2.8 mils and cured for 10 minutes at 200°C and the coated substrate was then subjected to the QUV B Accelerated Weathering Test at the same time and in the same manner as Coating B. The results of the weathering test are graphically illustrated in the Figure.

It can be seen from the Figure, that the coating produced in accordance with the present invention (Coating B) exhibited better weathering properties (as evaluated by gloss at a 20° angle) than Coating A.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A thermosetting powder coating composition comprising
a) a binder comprising
(1) a polyester polyol having an average hydroxyl functionality of from 1.9 to 2.4 which is a reaction product of
(i) an acid comprising at least 75% by weight of isophthalic acid,
(ii) at least one diol,
(iii) optionally, a polyol having a hydroxyl functionality greater than 2 , and
(iv) a catalyst
and
b) an isocyanate-based curing agent
in which the average of the functionalities of a) and b) is greater than 2.2 and less than 2.375.

2. The coating composition of Claim 1 in which the polyester polyol has an average hydroxyl functionality of from about 2.1 to 2.3.

3. The coating composition of Claim 1 in which the polyester polyol has an average hydroxyl functionality of approximately 2.2.

4. The coating composition of Claim 1 in which the average of the functionalities of a) and b) is approximately 2.25.

5. The coating composition of Claim 1 in which the diol is selected from the group consisting of ethylene glycol; diethylene glycol; triethylene glycol; propylene glycol; 1,3-propanediol; 2,4-dimethyl-2-ethylhexane-1,3-diol; 2,2-dimethyl-1 ,3-propanediol; 2-ethyl-2-butyl-1 ,3-propanediol; 2-ethyl-2-isobutyl-1,3-propanediol; 1,3-butanediol; 1,4-butanediol; neopentyl glycol; 1,5-pentanediol; 1,6-hexanediol; 1,8-octanediol; 2,2,4-trimethyl-1,6-hexanediol; thiodiethanol; 1,2-cyclohexanedimethanol; 1,4-cyclohexanedimethanol; 2,2,4,4-tetramethyl-1,3-cyclobutanediol; and mixtures thereof.

6. The coating composition of Claim 1 in which the diol is neopentylglycol.

7. The coating composition of Claim 1 in which the polyol is selected from the group consisting of trimethylolpropane; 1,2,3-propanetriol; trimethylol ethane; 1,2,6-hexanetriol; 2,2-bis(hydroxymethyl)-1,3-propanediol; 1,3,5-tris(2-hydroxyethyl)-isocyanurate; pentaerythritol; ditrimethylolpropane; and mixtures thereof.

8. The coating composition of Claim 1 in which the polyol is trimethylolpropane.

9. The coating composition of Claim 8 in which the diol is neopentyl glycol.

10. The coating composition of Claim 2 in which the diol is neopentyl glycol and the polyol is trimethylolpropane.

11. The coating composition of Claim 1 in which the curing agent is a blocked cycloaliphatic polyisocyanate.

12. The coating composition of Claim 1 in which the curing agent is a blocked hydrogenated diphenylmethane diisocyanate.

13. The coating composition of Claim 12 in which the diol is neopentyl glycol and the polyol is trimethylolpropane.

14. The coating composition of Claim 13 which further includes a filler and/or pigment in an amount such that the total filler/pigment content is no greater than 10% by weight.

15. A substrate coated with the coating composition of Claim 13 to a thickness no greater than 2.5 mils **characterized by** super durability and good impact performance.

16. A substrate coated with the coating composition of Claim 1 to a thickness no greater than 2 mils **characterized by** a forward/reverse impact of at least 80/80 inch pounds.
